# EUROPÄISCHE PATENTANMELDUNG

(11) **EP 2 413 123 A1**
(43) Veröffentlichungstag der Anmeldung: **01.02.2012**
(21) Anmeldenummer: 11004222.3
(22) Anmeldetag: 21.05.2011
(51) Int. Cl.: G01M 3/28, H02G 15/04

(54) **Dichtigkeitsprüfvorrichtung und -verfahren**

(30) Priorität: 31.07.2010 DE 202010010915 U
(71) Anmelder: F.E. Schulte Strathaus GmbH & Co. Kg, 59457 Werl (DE)
(72) Erfinder: Schulte Strathaus, Michael, Dr., 58739 Wickede Ruhr (DE)
(74) Vertreter: Gesthuysen, von Rohr & Eggert

(57) **Zusammenfassung**

Gegenstand der Erfindung ist eine Vorrichtung zur Überprüfung der Dichtigkeit einer Rohr- und/oder Kabeldurchführung (7) durch eine Wandfläche (8), wobei die Rohr- und/oder Kabeldurchführung (7) einen Durchgang mit beiderseitigen Dichtflächen (6) bildet, die die Stirnseiten der Kabeldurchführung (7) bilden und einen Raum zwischen sich einschließen, wobei die Vorrichtung ein Druckerzeugungsgerät (2), ein Druckmessgerät (3) und eine das Druckmessgerät (3) mit einer Injektionsspitze (5) verbindende Druckleitung (4) aufweist und wobei zum Überprüfen der Dichtigkeit der Rohr- und/oder Kabeldurchführung (7) eine Dichtfläche (6) der Kabeldurchführung (7) mittels der Injektionsspitze (5) durchstochen, im Raum zwischen den Dichtflächen (6) der Druck erhöht und eventuelle Veränderungen des Druckes über eine bestimmte Zeit gemessen wird.

## Beschreibung

Die Erfindung betrifft eine Vorrichtung zur Überprüfung der Dichtigkeit einer Rohr- und/oder Kabeldurchführung durch eine Wandfläche, wobei die Rohr-und/oder Kabeldurchführung einen Durchgang mit beidseitigen Dichtflächen bildet, die die Stirnseiten der Kabeldurchführung bilden und einen Raum zwischen sich einschließen.

Es gibt eine Fülle von Fällen, bei denen Kabel oder Rohre durch Wände oder Decken geführt werden, bei denen es auf die Dichtigkeit dieser Rohr- und/oder Kabeldurchführung ankommt. Das gilt etwa bei Schott-Durchgängen im Schiffbau oder bei Rohr- und Kabeldurchführungen in Bauwerken.

Derartige Rohr- und/oder Kabeldurchführungen müssen auf ihre Dichtigkeit hin überprüft werden können. Tests unter Laborbedingungen sind dabei häufig nicht ausreichend, da man die Durchführung am Ort des Einsatzes prüfen will.

Die bekannte Vorrichtung zur Überprüfung der Dichtigkeit einer Rohr-und/oder Kabeldurchführung, von der die Erfindung ausgeht (JP-A-04-064 028), geht von einer Rohr- und/oder Kabeldurchführung mit einem zylindrischen Mantel, der die Wandfläche durchsetzt, aus. Im Inneren des zylindrischen Mantels verläuft das Rohr oder Kabel, dessen Durchgang abgedichtet werden soll. Im Inneren des zylindrischen Mantels und das Rohr oder Kabel umgebend befindet- sich an einem Ende eine Dichtfläche aus abdichtendem Material. Dieses Material bildet gleichzeitig die dortige Stirnseite der Kabeldurchführung.

Zur Überprüfung der Dichtigkeit der Kabeldurchführung wird auf das offene Ende des zylindrischen Mantels ein abdichtender Stutzen aufgesetzt, der sowohl zum zylindrischen Mantel hin als auch zum abgedichteten Kabel hin hermetisch dicht ist. An eine Anschlussöffnung des abdichtenden Stutzens wird eine Druckleitung angeschlossen, die zu einem Druckmessgerät (Manometer) und zu einem Druckerzeugungsgerät (Pumpe bzw. Kompressor) führt. Durch die stirnseitige Dichtfläche im zylindrischen Mantel einerseits und den abdichtenden Stutzen andererseits ist das Innere der Kabeldurchführung hermetisch abgedichtet. Wird der Druck im Inneren erhöht, so kann der Druckverlauf gemessen und ausgewertet werden. Sinkt der Druck über eine bestimmte Zeit hinweg nicht, so kann man davon ausgehen, dass die Kabeldurchführung an der einseitigen Dichtfläche dicht ist. Stellt man einen Druckabfall fest, so wird der abdichtende Stutzen vom offenen Ende des zylindrischen Mantels entfernt und das Innere des zylindrischen Mantels mit weiterem Dichtmaterial zur Verstärkung der Dichtfläche aufgefüllt.

Die zuvor beschriebene Vorrichtung ist insoweit nachteilig als man eine in bestimmter Weise konstruierte Rohr- und/oder Kabeldurchführung benötigt, die nämlich den aus der Wand vorspringenden zylindrischen Mantel haben muss, auf den der abdichtende Stutzen zu Überprüfungszwecken aufgesetzt wird. Dieser abdichtende Stutzen wirkt also nicht etwa als weitere, im Normalbetrieb wirksame Dichtfläche.

Das der Erfindung zugrundeliegende Problem besteht darin, eine einschlägige Vorrichtung zur Überprüfung der Dichtigkeit anzugeben, mit der vor Ort die Dichtigkeit einer eingebauten Rohr- und/oder Kabeldurchführung überprüft werden kann, die einen Durchgang mit beidseitigen Dichtflächen bildet, die die Stirnseiten der Kabeldurchführung bilden und einen Raum zwischen sich einschließen.

Die zuvor aufgezeigte Problemstellung wird durch eine Vorrichtung mit den Merkmalen des Anspruchs 1 gelöst. Erfindungswesentlich ist eine wenigstens zeitweise eine der beiden Dichtflächen der Kabeldurchführung durchdringende Injektionsspitze mit angeschlossenem Druckerzeugungsgerät und Druckmessgerät.

Da die Dichtflächen einer Kabeldurchführung der in Rede stehenden Art aus einem Kunststoffmaterial bestehen, das mittels einer Injektionsspitze durchstochen werden kann, lässt sich im Raum zwischen den Dichtflächen der Druck erhöhen und messen. Ändert sich dieser Druck dann über eine gewisse Zeit, beispielsweise über 15 Minuten, nicht, so ist die gesamte Rohr- und/oder Kabeldurchführung als dicht zu beurteilen.

Vorzugsweise setzt man die beanspruchte Vorrichtung bei einer Rohr-und/oder Kabeldurchführung ein, deren Dichtflächen aus elastischem, insbesondere aus dauerelastischem Material bestehen. Bei einem derartigen dauerelastischen Material kann es sich um ein solches mit dem Markennamen FI-WA, DRIFIL oder NOFIRNO handeln.

Zweckmäßigerweise ist dem Druckmessgerät ein Sicherheitsventil zugeordnet. Dieses arbeitet als Überdruckventil, so dass der im Raum zwischen den Dichtflächen aufbaubare Druck eine Obergrenze hat.

Ferner sollte vorgesehen sein, dass zwischen dem Druckerzeugungsgerät und dem Druckmessgerät ein Rückschlagventil vorgesehen ist. Beim Druckerzeugungsgerät handelt es sich typischerweise um eine Pumpe oder einen Kompressor.

Die Injektionsspitze kann zeitlich begrenzt in der Dichtfläche eingebaut sein, oder aber auch dauerhaft in der Dichtfläche positioniert sein. Im erstgenannten Fall ist vorgesehen, dass die Injektionsspitze an der Druckleitung angebracht und nach erfolgter Messung aus der Dichtfläche herausziehbar ist. Im letztgenannten Fall ist vorgesehen, dass die Injektionsspitze von der Druckleitung trennbar ist und dadurch dauerhaft in der Dichtfläche verbleiben kann.

Um eine möglichst einfache Handhabung vor Ort zu gewährleisten, sieht die Erfindung vor, dass die Vorrichtung als mobile Messeinheit mit einem gemeinsamen Gehäuse ausgeführt ist, das alle Elemente der Vorrichtung aufnimmt und vorzugsweise als Koffer ausgebildet ist. Die Druckleitung mit der Injektionsspitze wird dann zum Einsatz aus dem gemeinsamen Gehäuse heraus genommen und an der Kabeldurchführung appliziert.

Gegenstand der Erfindung ist auch ein Verfahren zur Überprüfung der Dichtigkeit einer Rohr- und/oder Kabeldurchführung. Die erfindungsgemäß realisierten Verfahrensschritte sind im Anspruch 8 aufgeführt.

Bevorzugte Ausgestaltungen des Verfahrens sind Gegenstand der Ansprüche 9 und 10.

Erfindungswesentlich ist die Tatsache, dass man die Injektionsspitze mittels einer Druckleitung letztlich mit dem Druckerzeugungsgerät verbindet und über die Injektionsspitze den Druck im Raum zwischen den beidseitigen Dichtflächen der Kabeldurchführung auf einen bestimmten gewünschten Druck erhöht. Mittels des Rückschlagventils bleibt der Druckraum abgeschlossen. Man prüft mittels des Druckmessgeräts den Druckverlauf im System und damit auch im Raum zwischen den Dichtflächen. Ändert sich der Druck im System über eine gewisse Zeit, beispielsweise über 15 Minuten nicht, so bedeutet das, dass die gesamte Rohr- und/oder Kabeldurchführung dicht ist.

Zieht man die Injektionsspitze nach erfolgter Überprüfung wieder aus der Dichtfläche heraus, so muss die Dichtfläche wieder geschlossen werden, damit das System insgesamt dicht ist. Verbleibt die Injektionsspitze dauerhaft in der Dichtfläche, um spätere Messungen durchführen zu können, so muss man die Injektionsspitze selbst druckdicht verschließen.

Im Folgenden wird die Erfindung anhand einer lediglich ein Ausführungsbeispiel darstellenden Zeichnung näher erläutert. In der Zeichnung zeigt
- Fig. 1: einen Prüfkoffer gemäß der Erfindung und
- Fig. 2: in vereinfachter Darstellung die Elemente einer erfindungsgemäβen Vorrichtung zur Überprüfung der Dichtigkeit in Verbindung mit einer Kabeldurchführung.

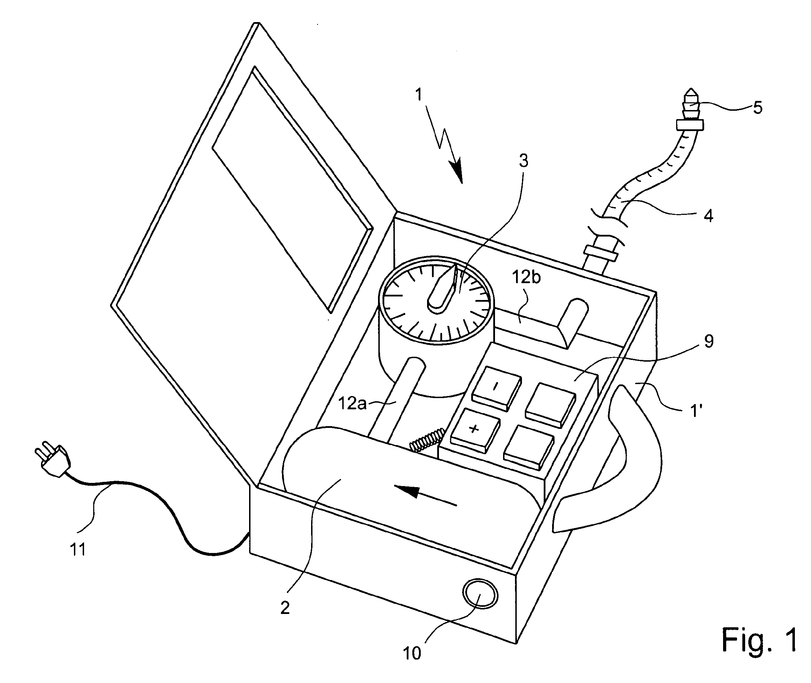

Fig. 1 zeigt die Vorrichtung 1 als mobile Messeinheit mit einem gemeinsamen Gehäuse 1'. Innerhalb des als Koffer ausgeführten Gehäuses 1' ist ein Druckerzeugungsgerät 2, hier in Form einer motorischen Pumpe angedeutet. Zugeordnet ist dem Druckerzeugungsgerät 2 ein Druckmessgerät 3 in Form eines Manometers. Außen angeschlossen am Gehäuse 1' ist eine Druckleitung 4, an deren Ende eine Injektionsspitze 5 angebracht ist.

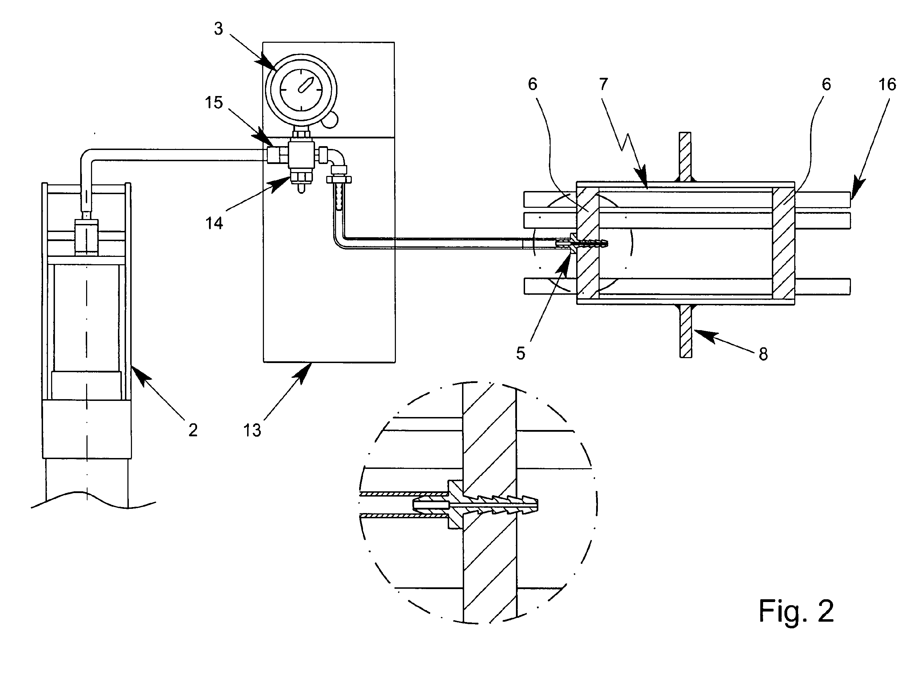

Fig. 2 kann man entnehmen, dass die Injektionsspitze 5 zum Zwecke der Überprüfung der Dichtigkeit einer Rohr- und/oder Kabeldurchführung 7 durch eine Dichtfläche 6, die die Stirnseite der Kabeldurchführung 7 bildet, gesteckt wird, so dass sie den Raum zwischen den beiden stirnseitigen Dichtflächen 6 der Kabeldurchführung 7 erreicht. Die Kabeldurchführung 7 sitzt in einer Wandfläche 8. Wandfläche 8 im Sinne der Lehre der vorliegenden Erfindung kann auch eine Deckenfläche oder Bodenfläche sein.

Im als Koffer ausgeführten Gehäuse 1' sind ferner zugeordnete elektrische und elektronische Schaltelemente 9 angedeutet. Ein Luftansaugstutzen 10 am Gehäuse 1' dient der Luftansaugung seitens des Druckerzeugungsgeräts 2, also Pumpe oder Kompressor. Die Vorrichtung 1 kann mittels einer Anschlussleitung 11 an den Versorgungsstrom angeschlossen werden. Im Inneren des Gehäuses 1' befindet sich eine Druckluft-Förderleitung 12a zwischen dem Druckerzeugungsgerät 2 und dem Druckmessgerät 3 und eine Druckluft-Förderleitung 12b zwischen dem Druckmessgerät 3 (Manometer) und dem Anschluss der Druckleitung 4.

Das der Druckerhöhung im Raum zwischen den Dichtflächen 6 der Kabeldurchführung 7 dienende Gas muss nicht Luft, sondern kann auch ein Inertgas sein oder ein anderes passendes Gas.

Fig. 2 zeigt, dass das Druckmessgerät 3 (Manometer) auf einer Ventilplatte 13 angeordnet ist. Dem Druckmessgerät 3 sind ein Sicherheitsventil 14 und ein Rückschlagventil 15 zugeordnet. In Fig. 2 zeigt die Kabeldurchführung 7 drei hindurch geführte Kabel 16. Die Stirnseiten der Kabeldurchführung 7 werden von den beiden Dichtflächen 6 gebildet.

Die Dichtflächen 6 können aus einem dauerelastischen Material gebildet sein. Die Injektionsspitze 5 kann dort lediglich zu Prüfzwecken eingebracht und nach erfolgter Messung aus der Dichtfläche 6 wieder herausgezogen werden. Sie kann aber auch dauerhaft eingebaut sein. Dann allerdings muss die Druckleitung 4 von der Injektionsspitze 5 getrennt werden können.

Gegenstand der Erfindung ist auch ein Messverfahren zur Überprüfung der Dichtigkeit einer Rohr- und/oder Kabeldurchführung durch eine Wandfläche, wobei die Rohr- und/oder Kabeldurchführung 7 einen Durchgang mit beidseitigen Dichtflächen 6 bildet, die die Stirnseiten der Kabeldurchführung 7 bilden und einen Raum zwischen sich einschließen. Dieses Verfahren zur Überprüfung der Dichtigkeit zeichnet sich dadurch aus, dass eine Dichtfläche 6 der Kabeldurchführung 7 mittels einer Injektionsspitze 5 durchstochen wird, die mit einem Druckerzeugungsgerät 2 verbunden ist, dass mittels des Druckerzeugungsgeräts 2 über die Injektionsspitze 5 der Druck im Raum zwischen den Dichtflächen 6 der Kabeldurchführung 7 auf einen bestimmten Druckwert erhöht wird, dass der erhöhte Druckwert mittels eines Druckmessgeräts 3 über eine bestimmte Zeit hinweg gemessen wird und dass dann, wenn sich der Druck über die bestimmte Zeit hinweg nicht ändert, die Dichtigkeit der Rohr-und/oder Kabeldurchführung festgestellt wird.

## Patentansprüche

1. Vorrichtung zur Überprüfung der Dichtigkeit einer Rohr- und/oder Kabeldurchführung (7) durch eine Wandfläche (8),
wobei die Rohr- und/oder Kabeldurchführung (7) einen Durchgang mit beiderseitigen Dichtflächen (6) bildet, die die Stirnseiten der Kabeldurchführung (7) bilden und einen Raum zwischen sich einschließen,
wobei die Vorrichtung ein Druckerzeugungsgerät (2), ein Druckmessgerät (3) und eine das Druckmessgerät (3) mit einer Injektionsspitze (5) verbindende Druckleitung (4) aufweist und
wobei zum Überprüfen der Dichtigkeit der Rohr- und/oder Kabeldurchführung (7) eine Dichtfläche (6) der Kabeldurchführung (7) mittels der Injektionsspitze (5) durchstochen, im Raum zwischen den Dichtflächen (6) der Druck erhöht und eventuelle Veränderungen des Druckes über eine bestimmte Zeit gemessen wird.

2. Vorrichtung nach Anspruch 1, **dadurch gekennzeichnet,**
**dass** die Dichtflächen (6) aus elastischem, insbesondere aus dauerelastischem Material bestehen.

3. Vorrichtung nach Anspruch 1 oder 2, **dadurch gekennzeichnet,**
**dass** zwischen dem Druckerzeugungsgerät (2) und dem Druckmessgerät (3) ein Rückschlagventil (15) vorgesehen ist.

4. Vorrichtung nach einem der Ansprüche 1 bis 3, **dadurch gekennzeichnet,**
**dass** dem Druckmessgerät (3) ein Sicherheitsventil (14) zugeordnet ist.

5. Vorrichtung nach einem der Ansprüche 1 bis 4, **dadurch gekennzeichnet,**
**dass** die Injektionsspitze (5) an der Druckleitung (4) angebracht und nach erfolgter Messung aus der Dichtfläche (6) herausziehbar ist.

6. Vorrichtung nach einem der Ansprüche 1 bis 5, **dadurch gekennzeichnet,**
**dass** die Injektionsspitze (5) von der Druckleitung (4) trennbar ist und dadurch dauerhaft in der Dichtfläche verbleiben kann.

7. Vorrichtung nach einem der Ansprüche 1 bis 6, **dadurch gekennzeichnet,**
**dass** die Vorrichtung als mobile Messeinheit mit einem gemeinsamen Gehäuse (1') ausgeführt ist, das alle Elemente der Vorrichtung aufnimmt und vorzugsweise als Koffer ausgebildet ist.

8. Verfahren zur Überprüfung der Dichtigkeit einer Rohr- und/oder Kabeldurchführung durch eine Wandfläche,
wobei die Rohr- und/oder Kabeldurchführung einen Durchgang mit beidseitigen Dichtflächen bildet, die die Stirnseiten der Kabeldurchführung bilden und einen Raum zwischen sich einschließen,
**dadurch gekennzeichnet,**
**dass** eine Dichtfläche der Kabeldurchführung mittels einer Injektionsspitze durchstochen wird, die mit einem Druckerzeugungsgerät verbunden ist, dass mittels des Druckerzeugungsgeräts über die Injektionsspitze der Druck im Raum zwischen den Dichtflächen der Kabeldurchführung auf einen bestimmten Druckwert erhöht wird, dass der erhöhte Druckwert mittels eines Druckmessgeräts über eine bestimmte Zeit hinweg gemessen wird und dass dann, wenn sich der Druck über die bestimmte Zeit hinweg nicht ändert, die Dichtigkeit der Rohr- und/oder Kabeldurchführung festgestellt wird.

9. Verfahren nach Anspruch 8, **dadurch gekennzeichnet,**
**dass** die Injektionsspitze nach der Überprüfung der Dichtigkeit aus der Dichtfläche wieder herausgezogen wird und eine eventuell verbleibende Öffnung in der Dichtfläche wieder druckdicht verschlossen wird.

10. Verfahren nach Anspruch 8, **dadurch gekennzeichnet,**
**dass** die Injektionsspitze nach Abschluss der Überprüfung in der Dichtfläche verbleibt, von einer die Injektionsspitze mit dem Druckmessgerät bzw. dem Druckerzeugungsgerät verbindenden Druckleitung getrennt und druckdicht verschlossen wird.
